# EUROPÄISCHE PATENTSCHRIFT

(11) **EP 0 753 017 B1**
(45) Veröffentlichungstag und Bekanntmachung des Hinweises auf die Patenterteilung: **13.05.1998**
(21) Anmeldenummer: 95909726.2
(22) Anmeldetag: 16.02.1995
(51) Int. Cl.: C08F 2/44, C08F 265/06

(54) **GIESSBARE, AUSHÄRTBARE MASSE, ZUR HERSTELLUNG VON KUNSTSTOFFORMTEILEN**
CASTABLE CURABLE COMPOUND FOR THE PRODUCTION OF PLASTIC MOULDINGS
MATIERE POUVANT ETRE COULEE ET CUITE, UTILISEE POUR PRODUIRE DES PIECES MOULEES EN PLASTIQUE

(30) Priorität: 26.03.1994 DE 4410526
(43) Veröffentlichungstag der Anmeldung: 15.01.1997
(73) Patentinhaber: Blanco GmbH & Co. KG, D-75038 Oberderdingen (DE); SCHOCK & CO. GMBH, D-73614 Schorndorf (DE)
(72) Erfinder: HARKE, Stefan, D-74889 Sinsheim-Rohrbach (DE); GRATHWOHL, Stefanie, D-75447 Sternenfels (DE); PATERNOSTER, Rudolf, D-94269 Rinchnach (DE); WILHELM, Thomas, D-75056 Sulzfeld (DE); HOCK, Klaus, D-94209 Regen (DE); FENZL, Werner, D-94209 Rengen (DE)
(74) Vertreter: Hoeger, Stellrecht & Partner
(86) Internationale Anmeldenummer: EP9500562
(87) Internationale Veröffentlichungsnummer: WO9526368

(56) Entgegenhaltungen:
- EP-A- 0 598 552
- DE-A- 1 495 296
- DE-A- 2 449 656

## Beschreibung

Die Erfindung betrifft eine gießbare, aushärtbare Masse zur Herstellung von Kunststofformteilen, umfassend einen Sirup, welcher einen Anteil an Acrylsäuremonomer und/oder Derivaten hiervon enthält sowie einen partikelförmigen, anorganischen Füllstoff mit einem Anteil von ca. 50-90 Gew.% bezogen auf die Gesamtmasse, gegebenenfalls Pigmente und ein radikalisches Initiatorsystem.

Solche gießbare, härtbare Massen, insbesondere zur Herstellung von Funktionsteilen im Küchen- und Badbereich, insbesondere von Küchenspülen, Arbeitsplatten, Waschbecken, Badewannen etc., sind beispielweise aus der DE 42 49 656 C2 oder dem US-Patent 3,827,933 bekannt.

Entscheidend beim Einsatz der Kunststofformteile als Funktionsteile im Küchen- und Badbereich ist u.a. deren Verhalten im Kontakt mit heißem Wasser, was bei qualitativ hochstehenden Produkten nicht zu einer Veränderung der Gebrauchseigenschaften und insbesondere auch nicht im Aussehen führen sollte.

Bei den bisher gängigen Formmassen wurden dem Sirup zur Verminderung des Schrumpfes beim Aushärten, in der Funktion als Bindemittel und zur Verhinderung des Entstehens von Materialspannungen beim Aushärten bestimmte Mengen eines präpolymeren Polymethylmethacrylat (im folgenden PMMA abgekürzt) zugesetzt. Die PMMA-Zusätze wurden im Hinblick auf die Verminderung des Schrumpfes und die Verminderung von Materialspannungen im ausgehärteten fertigen Formteil diesen Funktionen durchaus gerecht, jedoch wiesen die Formteile, insbesondere in einer dunklen pigmentierten Form, eine unzureichende Kochfestigkeit auf. Unter dem Begriff Kochfestigkeit versteht man die Tendenz der Farbveränderung von pigmentierten Kunststofformteilen, die anhand der DIN-Norm 53393 getestet und als Summe der Abweichungsquadrate der Einzelwerte von Helligkeit, Gelbwert und Rotwert als sogenannte "δE"-Werte angegeben wird.

EP-A-0 598 552 beschreibt quernetzbare polymere Gießzusammensetzungen für optische Artikel wie ophthalmische Linsen. Zur Verbesserung des Brechungsindex wird vorgeschlagen, ein Fluorendiacrylat oder -dimethacrylat-Monomer und ein Comonomer mit einer polymerisierbaren Doppelbindung zu verwenden.

Aufgabe der vorliegenden Erfindung ist es, eine gießbare, aushärtbare Masse vorzuschlagen, aus der sich Kunststofformteile herstellen lassen, die eine wesentlich verbesserte Kochfestigkeit aufweisen.

Diese Aufgabe wird bei der eingangs beschriebenen Masse erfindungsgemäß dadurch gelöst, daß der Sirup, neben dem Anteil an Acrylsäuremonomer und/oder Derivaten hiervon, einen Anteil einer weiteren Komponente umfaßt, welche eine oder mehrere Verbindungen der Formel (I) enthält: 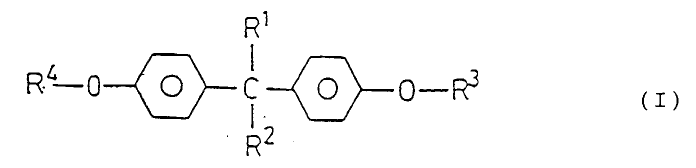 worin R¹ und R² gleich oder verschieden sind und ein Wasserstoffatom, eine C₁-C₆-Alkylgruppe, eine Arylgruppe oder gemeinsam eine Cycloalkylgruppe repräsentieren, wobei die C₁-C₆-Alkyl-, die Aryl- und die Cycloalkylgruppe ein- oder mehrfach mit einem Halogenatom, einer Cyanogruppe, einer Alkylgruppe, einer Hydroxylgruppe, einer Carbonylgruppe und/oder einer Carboxylgruppe substituiert sein kann,
worin R³ und R⁴ gleich oder verschieden sind und
a) eine ethylenisch ungesättigte Gruppe der Formel (II) repräsentieren

   -R⁵-R⁶ (II)

   worin R⁵ eine Einfachbindung, eine Ethergruppe der Formel -(CR₂⁷)ₘ-O- (worin R⁷ Wasserstoff oder Alkyl und m eine ganze Zahl von 1 bis 10 bedeutet) oder eine Polyethergruppe der Formel -(CH₂-CH₂-O)ₙ- oder -(CH₂-CH₂-CH₂-O)ₙ- repräsentiert, wobei n eine ganze Zahl von 1 bis 6 ist und
   worin R⁶ eine mindestens einfach ungesättigte Alkenylgruppe mit 2 oder mehr C-Atomen, eine Acrylat- oder eine Methacrylatgruppe repräsentiert;
   und/oder
b) eine Gruppe der Formel (III) repräsentieren: 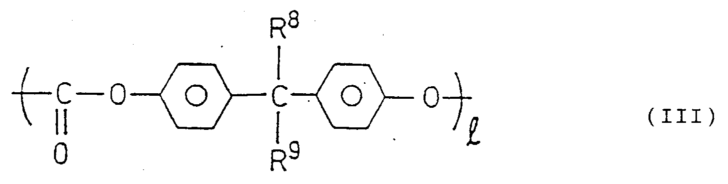 worin R⁸ und R⁹ wie R¹ und R², jedoch unabhängig davon definiert sind
   und 1 eine ganze Zahl von 1 bis 10 000 ist, wobei R⁸ und R⁹ bei 1 > 1 in der Formel (III) wechselnde Bedeutung haben können,
   und/oder
c) Wasserstoff repräsentieren, wobei höchstens einer der Reste R³ und R⁴ ein Wasserstoffatom ist,
   und wobei der Sirup gegebenenfalls einen Anteil eines Präpolymers, insbesondere PMMA umfaßt
   sowie ferner einen partikelförmigen anorganischen Füllstoff mit einem Anteil von ca. 50 bis 90 Gew.% bezogen auf die Gesamtmasse, Pigmente und ein radikalisches Initiatorsystem enthält, wobei die Viskosität der Gesamtmasse ≤ 100 Pa ^{.} s beträgt und wobei das Verhältnis der Summe der Gewichtsanteile am Acrylsäuremonomeren und dessen monomeren Derivaten zu der Summe der Gewichtsanteile der weiteren Komponente und der Gewichtsanteile von PMMA 99:1 bis 30:70 beträgt, wobei in Gegenwart von PMMA das Verhältnis der Gewichtsanteile der weiteren Komponente zu den PMMA-Gewichtsanteilen mindestens 5:95 beträgt.

Unter den Acrylsäuremonomeren bzw. deren Derivate werden insbesondere folgende Derivate verstanden:
Methylmethacrylat, Ethylmethacrylat, n-Butylmethacrylat, t-Butylmethacrylat, Ethylacrylat, Butylacrylat, t-Butylacrylat, 2-Ethylhexylacrylat, Ethylenglycoldimethacrylat, Trimethylolpropantrimethacrylat, Hydroxypropylmethacrylat, Hydroxyethylacrylat, Dimethylaminoethylmethacrylat und Diethylaminoethylmethacrylat sowie Acrylnitril und Methacrylnitril. Erstaunlicherweise kann man durch den Zusatz einer weiteren Komponente gemäß der Definition a) und/oder der Definition gemäß b) eine wesentliche Verbesserung der Kochfestigkeit erreichen gegenüber bisher bekannten Werten mit den am besten geeigneten PMMA-Zusätzen. Die weitere Komponente sollte zumindest eine gewisse Löslichkeit in dem verwendeten Sirup aufweisen.

Die Zugabe einer weiteren Komponente zu dem Sirup bedeutet, wie oben bereits ausgeführt, nicht, daß ein PMMA-Anteil beispielsweise vollständig entfallen muß, sondern die weitere Komponente ersetzt vielmehr ganz oder auch nur teilweise den bislang verwendeten PMMA-Anteil.

Der PMMA-Anteil, soweit vorhanden, übernimmt damit weiterhin seine Funktion der Verminderung des Schrumpfes der Masse beim Aushärten und damit auch die Verminderung der Materialspannungen im fertigen Produkt.

Die weitere, gegebenenfalls ethylenisch ungesättigte Komponente übernimmt einen Teil der oder insgesamt die Bindemittelfunktion des PMMA und auch dessen Funktion der Verminderung der Spannungen im fertigen Produkt, verbessert aber darüber hinaus auch noch die Kochfestigkeit des fertigen Produkts. Besonders deutlich läßt sich die Verbesserung an dunkelgefärbten Kunststoffformteilen beobachten, beispielsweise bei der Farbe Dunkelbraun oder Anthrazit.

Ohne sich darauf festlegen zu wollen gehen die Erfinder der vorliegenden neuen aushärtbaren Gießmasse davon aus, daß mit dem erfindungsgemäßen Zusatz der weiteren, gegebenenfalls ethylenisch ungesättigten Komponente eine bessere Anbindung der Kunststoffmatrix an die anorganischen Füllstoffe gelingt.

Folgende Beispiele geben bevorzugte Verbindungen als weitere ethylenisch ungesättigte Komponente wie sie der Spezifikation a) entsprechen:
tetraethoxyliertes Bisphenol A-dimethacrylat (erhältlich als Diacryl 121 von Akzo Chemicals GmbH, Düren) und diethoxyliertes Bisphenol-A-dimethacrylat (erhältlich als Diacryl 101 von Akzo Chemicals GmbH).

Beim alleinigen Einsatz dieser Komponente als partieller PMMA-Ersatz erhält man neben einer deutlich verbesserten Kochfestigkeit auch eine Kratzfestigkeit, die deutlich besser ist, als bei den Produkten, die aus herkömmlichen aushärtbaren Gießmassen gefertigt sind.

Dies gilt nicht nur für sogenannte spröde Kratzer, die mit spitzen Gegenständen im Material erzeugt werden können, sondern auch für sogenannte viskoelastische Kratzer, die durch stumpfe Gegenstände hervorgerufen werden.

Diese Verbesserung der Resistenz gegen spröde Kratzer einerseits und viskoelastische Kratzer andererseits ist um so überraschender, als normalerweise hier keine gleichlaufenden Ergebnisse erzielt werden können.

Darüber hinaus bleibt erstaunlicherweise die Schlagzähigkeit des Materials unverändert, obwohl durch den teilweisen oder gar vollständigen Ersatz des PMMA-Anteils durch die weitere ethylenisch ungesättigte Komponente eine höhere Vernetzungsdichte im Produkt erhalten wird, dem normalerweise eine Verringerung der Schlagzähigkeit gegenübersteht.

Auch ein spezieller Biege-Test zeigt verbesserte Werte, d.h. bei Beaufschlagung einer Probe mit nichtionischen Tensiden unter einer Biegespannung werden keine Haarrisse gebildet, im Gegensatz zu den herkömmlichen Materialien.

Die weitere Komponente, welche sich nach der Definition b) richtet und damit in die Gruppe der Polycarbonate fällt, wird beispielhaft durch folgende konkrete Verbindungen repräsentiert:
Trimethylcyclohexyl-Bisphenol-Polycarbonat-Homopolymer mit einem Molekulargewicht von 20.000 bis 30.000 und einem Glasübergangspunkt von 238°C (Bayer AG);
Bisphenol A-Trimethylcyclohexyl-Bisphenol-Polycarbonat-Copolymere mit einem Molekulargewicht von 20.000 - 30.000 mit den Verhältnissen der Bisphenol-A-Polycarbonat-Komponente (BPA-PC) zur Trimethylcyclohexyl-Bisphenol-Polycarbonat-Komponente (TMC-PC) von:
   80:20, Glasübergangspunkt 174°C (APEC HT KU-1-9341, Bayer AG)
   65:35, Glasübergangspunkt 187°C (APEC HT KU-1-9351, Bayer AG)
   45:55, Glasübergangspunkt 205°C (APEC HT KU-1-9371, Bayer AG)

Reines Bisphenol A-Polycarbonat (Makrolon) läßt sich für vorliegende Erfindung nur schwer einsetzen. Problematisch ist bei diesem Produkt, daß es in MMA im wesentlichen nur anquillt und eine hohe Viskosität ergibt.

Ähnlich gilt dies für Polyestercarbonate mit aromatischen Esteranteilen und einem Carbonatanteil auf der Basis Bisphenol A. Hier wird zwar eine etwas bessere Anquellbarkeit beobachtet, die Viskosität der Masse ist jedoch nach wie vor hoch, insbesondere besteht keine vollständige Löslichkeit in MMA.

Die Polycarbonate können zwischen 1 und 10.000 Struktureinheiten aufweisen, wie oben bereits definiert. Vorzugsweise wird der zahlenmäßige Bereich für die ganze Zahl 1 jedoch im Bereich von 3 bis 500, idealerweise zwischen 5 und 100 angesiedelt.

Beim alleinigen Einsatz der Polycarbonate als weitere ethylenisch ungesättigte Komponente erhält man eine drastische Besserung der Kochfestigkeit. Vorteile, wie sie bei der Definition gemäß a) erhalten wurden, d. h. auch im Bezug auf die Kratzfestigkeit, werden hier nicht beobachtet.

Selbstverständlich lassen sich Anteile der weiteren Komponente gemäß der Definition a) und der Definition b) problemlos mischen, wobei ein mehr oder weniger großer zusätzlicher Effekt bei der Kratzfestigkeit erzielt wird, je nach dem, welche Anteile der Komponente gemäß der Definition a) in der Mischung vorliegen.

Der Füllstoff wird vorzugsweise als feinteiliger Füllstoff verwendet, jedoch sollte ein Anteil von mindestens 80 Gew.% des Füllstoffs eine Korngröße > 10 µm aufweisen.

Bei einer besonders bevorzugten Korngrößenverteilung wird darauf geachtet, daß mindestens 10 Gew.% des Füllstoffs eine Korngröße > 60 µm aufweisen.

Bevorzugt wird das Verhältnis der Summe der Gewichtsanteile des Acrylsäuremonomeren und dessen monomeren Derivate zu der Summe der Gewichtsanteile der weiteren Komponente und PMMA von 95:5 bis 40:60 gewählt, weiter bevorzugt im Bereich von 90:10 bis 50:50.

Der anorganische Füllstoff wird häufig in silanisierter Form verwendet, was die Anbindung an die Kunststoffmatrix erleichtert. Beispiele für den anorganischen Füllstoff, die einzeln oder in Kombination verwendet werden können, sind Glas, Glaskugeln, Quarz, Cristobalit, Tridymit oder andere SiO₂-Modifikationen sowie Aluminiumtrihydroxid.

Die Erfindung betrifft schließlich noch Kunststofformteile, welche aus einer erfindungsgemäßen gießbaren, aushärtbaren Masse wie oben beschrieben hergestellt sind.

Diese und weitere Vorteile werden im folgenden anhand der Beispiele noch näher erläutert.

### Beispiele

1. Verwendetes Herstellungsverfahren für die getesteten Kunststofformteile:
   Die aushärtbare Masse wird in eine Gießform gefüllt; die der Sichtseite des Formteils entsprechende Formhälfte wird zunächst auf 80° C geheizt und nach dem Befüllvorgang auf 100° C gebracht. Die der Rückseite des Formteils entsprechende Form wird von anfänglichen 30° C ebenfalls auf 100° C gebracht. Der Aushärtezyklus dauert ca. 30 Minuten.
   Als Form wird eine typische Form für eine Küchenspüle verwendet und aus dem Beckenboden des hergestellten Formteils wird eine Probe von 10 x 10 cm ausgeschnitten.
2. Kochtest
   Die wie oben beschrieben erhaltene Probe aus dem Beckenboden wird für den nachfolgend beschriebenen Kochtest verwendet. Dies wird mit einer sogenannten Bayer-Laterne durchgeführt. Diese Bayer-Laterne entspricht einer Apparatur, wie sie in der DIN-Vorschrift 53393 beschrieben ist.
   Die Probe wird entsprechend der Norm zugeschnitten und eingespannt. Damit ist es möglich, den Probekörper auch bei einseitiger Belastung zu prüfen.
   Bei dem Kochtest wird Wasser von 90° C verwendet, wobei sichergestellt wird, daß die gesamte Probenoberfläche mit Wasser bedeckt ist. Abweichend von der DIN-Norm 53393 werden folgende Prüfbedingungen gewählt:
   a) Es wird über einen Zeitraum von 16 Stunden hinweg getestet.
   b) Die Wasserein- und -auslässe der Bayer-Laterne werden an einen Thermostaten mit einem Wasservorrat von 20 l angeschlossen, der für die Temperierung und für einen ständigen Wasseraustausch sorgt. Der Thermostat sorgt ferner für einen Durchfluß von 2 bis 3 l/min durch die Testapparatur.
   c) Bestimmung der "δE"-Werte:
      die Farbe der behandelten sowie der unbehandelten Probe wird mit einem handelsüblichen Farbmessgerät (CR200 der Firma Minolta) im LAB-System vermessen.
      Danach ist bis zur Messung der Kochfestigkeit eine Wartezeit von 24 Stunden exakt einzuhalten.
      Die Farbveränderung nach dem Test wird als Wurzel aus der Summe der Abweichungsquadrate der Einzelwerte betreffend die Helligkeit, den Gelbwert und den Rotwert als "δE"-Wert angegeben, welcher definitionsgemäß > 0 ist und welcher ein Maß für die Kochfestigkeit bildet.
   3. Kratzfestigkeitstest
      Die Kratzfestigkeit wurde nach folgender Prüfvorschrift getestet:
      Mit einem "Hardness- and Adhesiontester" (Modell 413 der Firma Erichsenn, Hemer, Deutschland) wurden mit Hilfe einer Diamantnadel mit 90°-Kegel Kratzer bzw. mit Hilfe einer Hartmetallkugel mit einem Durchmesser von 0,5 mm mit aufsteigenden Belastungen von 1 bis 10N in einer Probe aus einem Beckenboden erzeugt. Die Tiefe dieser Kratzer wurde mit einem Rauhtiefenmeßgerät (Modell T2000 mit Linearvorschubeinheit LV50 der Firma Hommelwerke in Villingen-Schwenningen, Deutschland) ausgemessen und gegen die Belastung aufgetragen.
   4. Viskositätsmessung
      Für die Viskositätsmessungen wurde ein Viskotester VT501 der Firma Haake verwendet, wobei als Drehkörper ein sogenanntes Einhängewerkzeug E30 für einfache Relativmessungen verwendet wurde. Die Probe wurde bei einer Temperatur von 20° C gemessen, für die Probe wurde ein Polypropylenbecher mit ca. 200 ml Inhalt und einem Durchmesser von 10 cm verwendet. Der Hersteller empfiehlt Becher mit einem Durchmesser, der dem vierfachen eines Drehkörpers entspricht (d Drehkörper = 24 mm, d Becher = 100 mm). Bei allen Messungen auf Drehzahlstufe 2 betrieben, d. h. mit einer Umdrehungszahl von 8,3/min bzw. einer Schergeschwindigkeit von 0,8 sec⁻¹.

### Vergleichsbeispiel 1

2 kg PMMA (Vedril 9K) werden in 8 kg MMA gelöst und mit 200 g Trimethylolpropantrimethacrylat und einem Trennmittel in Form von herkömmlicher Seife oder Stearinsäure versetzt. Dann werden 17,4 kg eines handelsüblichen Cristobalitmehls (Korngrößenverteilung: ca. 80 Gew% > 10 µm und ca. 20 Gew% > 60 µm) als Füllstoff zugegeben, so daß ein Füllstoffgehalt von ca. 63 Gew. %, bezogen auf die Gesamtmasse, erreicht wird.

Zusätzlich wird ein braunes Pigment sowie Peroxid als Initiator zugegeben und die Masse nach der obengenannten Vorschrift in einem Formenhohlraum für eine typische Küchenspüle ausgehärtet.

Die Viskosität der aushärtbaren Gießmasse lag bei ca. 2 Pa ^{.} s und diese Masse war sehr gut verarbeitbar.

Als Ergebnis des Kochfestigkeitstests erhält man einen "δE"Wert von 5,16.

### Vergleichsbeispiel 2

Setzt man in der Rezeptur des Vergleichsbeispiels 1 bei sonst unveränderter Zusammensetzung PMMA der Firma Degussa mit der Handelsbezeichnung LP51/03 ein, erhält man einen besseren Kochfestigkeitswert von "δE" = 3,14.

### Beispiel 1

Anstelle des in den Vergleichsbeispielen 1 und 2 verwendeten PMMA werden im vorliegenden Fall als weitere Komponente 2 kg eines hochtemperaturbeständigen Polycarbonates vom Typ Apec HT KU-1-9371 der Firma Bayer AG eingesetzt, welches einen Glasübergangspunkt von 205°C aufweist. Dieses Polycarbonat wird in 8 kg MMA gelöst und mit 200 g Trimethylolpropantrimethacrylat als Vernetzer sowie einem Trennmittel in Form einer handelsüblichen Seife oder Stearinsäure versetzt. Danach werden wie oben 17,4 kg eines handelsüblichen Cristobalitmehls (Korngrößenverteilung wie im Vergleichsbeispiel 1) als Füllstoff zugegeben, so daß ein Füllstoffgehalt von 63 Gew.% erreicht wird. Zusätzlich wird braunes Pigment und als Initiator Peroxid zugegeben und die Masse in einen üblichen Formenhohlraum gefüllt. Die Masse wird nach der obengenannten Vorschrift ausgehärtet.

Die Viskosität der Masse gemäß Beispiel 1 lag bei ca. 6 Pa ^{·} s; die Masse war sehr gut verarbeitbar.

Der Kochfestigkeitstest ergab einen "δE"-Wert von 1,65, d.h. der Kochfestigkeitswert konnte um nahezu den Faktor 2 verbessert werden, gegenüber dem besonders guten PMMA-Typ LP51/03 (Vergleichsbeispiel 2).

### Beispiel 2

Es wird ein Sirup aus 1 kg PMMA des Typs Vedril 9K, 4 kg MMA und 5 kg Diacryl 101 (Akzo Chemicals GmbH) als weitere Komponente sowie 200 g Trimethylolpropandimethacrylat als Vernetzer hergestellt. Dazu werden 17,2 kg des in Vergleichsbeispiel 1 erwähnten Cristobalitmehles zugegeben, so daß der Füllstoffgehalt 63 Gew.% an der Gesamtmasse beträgt. Daneben werden Pigmente und Peroxide wie bei den vorigen Beispielen zugegeben.

Die Viskosität der verarbeitbaren Masse liegt bei 10 Pa ^{·} s; die Masse ist sehr gut verarbeitbar.

Als Kochfestigkeitswert ergibt sich ein sensationeller "δE"Wert von 0,46.

Das hier verwendete Diacryl kann auch als Vernetzer vergleichsweise geringer Vernetzungsdichte aufgefaßt werden. Hervorzuheben ist im Rahmen dieses Ausführungsbeispieles, daß sich nicht nur die Kochfestigkeit drastisch verbessert hat, sondern auch die Kratzfestigkeit des erhaltenen Produktes ist wesentlich besser, als bei dem zuvorbeschriebenen Vergleichsbeispiel. Das Eindringen der verschiedenen Werkzeuge wird erheblich behindert. Ungewöhnlicherweise findet man, daß eine Verbesserung bei beiden Werkzeugen, d. h. beim Diamant, der spröde Kratzer erzeugt, sowie bei der Kugel, die viskoelastische Kratzer erzeugt, erreicht werden konnte (vgl. Tabelle 1).

**Tabelle 1**

| | | | | | | | | |
|---|---|---|---|---|---|---|---|---|
| Diamant | | | | | | | | |
| Belastung (N) | 10 | 9 | 8 | 7 | 6 | 5 | 4 | 3 |
| | | | | | | | | |
| Kratzertiefe (µm) | | | | | | | | |
| Beispiel 2 | 10 | 9 | 8 | 5 | 4 | 3 | 2 | 1 |
| Vergleichsbeispiel | 18 | 15 | 13 | 12 | 8 | 4 | 2 | 2 |
| | | | | | | | | |
| Kugel Kratzertiefe (µm) | | | | | | | | |
| Beispiel 2 | 1,0 | 0,9 | 0,7 | - | - | | | |
| | | | | | | | | |
| Vergleichsbeispiele 1 und 2 | 2,0 | 1,4 | 1,0 | 1,0 | 1,0 | | | |

Neben dem extrem guten Kochfestigkeitswert wird auch eine unveränderte Schlagzähigkeit beobachtet, obwohl man durch die erhöhte Vernetzungsdichte eine Verringerung erwarten sollte.

Die unter Beispiel 1 angegebene Rezeptur läßt sich wie folgt variieren (Analoges gilt auch für Beispiel 2):

Möchte man eine Masse mit geringer Viskosität einsetzen, dann können beispielweise 5 kg eines Sirups nach Beispiel 1 mit 5 kg Diacryl 101 vermischt werden, dieser Mischung 15 kg des genannten Cristobalitmehls zugegeben werden, wobei eine Viskosität von 1,9 Pa ^{.} s erhalten wird. Diese Masse ist gut verarbeitbar.

Erhöht man bei dieser Variante der Rezeptur den Anteil des Cristobalitmehls auf 23 kg, steigt die Viskosität der Gesamtmasse auf 22 Pa ^{.} s und die Masse ist immer noch verarbeitbar.

Bei einer Steigerung des Anteils des Cristobalitmehls auf 40 kg steigt die Viskosität der Gesamtmasse auf sehr viel mehr als 100 Pa ^{.} s und die Masse ist nicht mehr verarbeitbar.

Ab einer Viskosität von ca. 80 Pa ^{.} s wird es extrem schwierig, die erfindungsgemäße Masse in eine Gießform zu fördern, weshalb vorzugsweise mit Viskositäten ≤ 60 Pa ^{.} s gearbeitet wird.

## Patentansprüche

1. Gießbare, aushärtbare Masse zur Herstellung von Kunststofformteilen, umfassend
einen Sirup, welcher einen Anteil an Acrylsäuremonomerem und/oder Derivaten hiervon und einen Anteil einer weiteren Komponente umfaßt, welche eine oder mehrere Verbindungen der Formel (I) enthält: 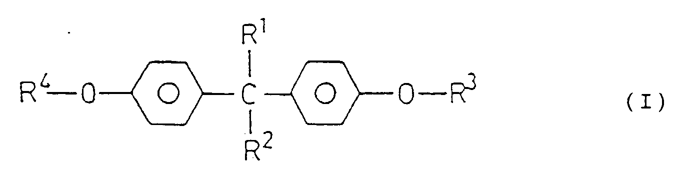 worin R¹ und R² gleich oder verschieden sind und ein Wasserstoffatom, eine C₁-C₆-Alkylgruppe, eine Arylgruppe oder gemeinsam eine Cycloalkylgruppe repräsentieren, wobei die C₁-C₆-Alkyl-, die Aryl- und die Cycloalkylgruppe ein- oder mehrfach mit einem Halogenatom, einer Cyanogruppe, einer Alkylgruppe, einer Hydroxylgruppe, einer Carbonylgruppe und/oder einer Carboxylgruppe substituiert sein kann,
worin R³ und R⁴ gleich oder verschieden sind und
a) eine ethylenisch ungesättigte Gruppe der Formel (II) repräsentieren
-R⁵-R⁶ (II)
worin R⁵ eine Einfachbindung, eine Ethergruppe der Formel -(CR₂⁷)ₘ-O- (worin R⁷ Wasserstoff oder Alkyl und m eine ganze Zahl von 1 bis 10 bedeutet) oder eine Polyethergruppe der Formel -(CH₂-CH₂-O)ₙ- oder -(CH₂-CH₂-CH₂-O)ₙ- repräsentiert, wobei n eine ganze Zahl von 1 bis 6 ist und
worin R⁶ eine mindestens einfach ungesättigte Alkenylgruppe mit 2 oder mehr C-Atomen, eine Acrylat- oder eine Methacrylatgruppe repräsentiert;
und/oder
b) eine Gruppe der Formel (III) repräsentieren: 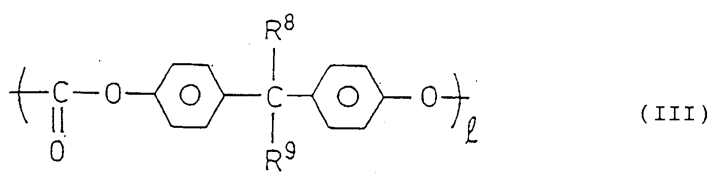 worin R⁸ und R⁹ wie R¹ und R², jedoch unabhängig davon definiert sind
und l eine ganze Zahl von 1 bis 10 000 ist, wobei R⁸ und R⁹ bei l > 1 in der Formel (III) wechselnde Bedeutung haben können,
und/oder
c) Wasserstoff repräsentieren, wobei höchstens einer der Reste R³ und R⁴ ein Wasserstoffatom ist,
und wobei der Sirup gegebenenfalls einen Anteil eines Präpolymers, insbesondere Polymethylmethacrylat (PMMA) umfaßt
sowie ferner einen partikelförmigen anorganischen Füllstoff mit einem Anteil von ca. 50 bis 90 Gew.% bezogen auf die Gesamtmasse, Pigmente und ein radikalisches Initiatorsystem enthält, wobei die Viskosität der Gesamtmasse ≤ 80 Pa ^{·} s beträgt und wobei das Verhältnis der Summe der Gewichtsanteile an Acrylsäuremonomeren und dessen monomeren Derivaten zu der Summe der Gewichtsanteile der weiteren Komponente und der Gewichtsanteile von Präpolymer 99:1 bis 30:70 beträgt, wobei in Gegenwart von Präpolymer das Verhältnis der Gewichtsanteile der weiteren Komponente zu den Präpolymer-Gewichtsanteilen mindestens 5:95 beträgt.

2. Gießbare Masse nach Anspruch 1, dadurch gekennzeichnet, daß die Korngrößenverteilung des anorganischen Füllstoffs so gewählt ist, daß mindestens 80 Gew.% des Füllstoffs eine Korngröße > 10 µm aufweisen.

3. Gießbare Masse nach Anspruch 1 oder 2, dadurch gekennzeichnet, daß die Korngrößenverteilung des anorganischen Füllstoffs so gewählt ist, daß mindestens 10 Gew.% des Füllstoffs eine Korngröße > 60 µm aufweisen.

4. Gießbare Masse nach einem der Ansprüche 1 bis 3, dadurch gekennzeichnet, daß das Verhältnis der Summe der Gewichtsanteile des Acrylsäuremonomeren und dessen mono meren Derivaten zu der Summe der Gewichtsanteile der weiteren Komponente und PMMA von 95:5 bis 40:60, weiter bevorzugt von 90:10 bis 50:50 beträgt.

5. Gießbare Masse nach einem der Ansprüche 1 bis 4, dadurch gekennzeichnet, daß der anorganische Füllstoff silanisiert ist.

6. Gießbare Masse nach einem der Ansprüche 1 bis 5, dadurch gekennzeichnet, daß der anorganische Füllstoff einzeln oder in Kombination Glas, Glaskugeln, Quarz, Cristobalit, Tridymit oder andere SiO₂-Modifikationen sowie Aluminiumtrihydroxid umfaßt.

7. Kunststofformteil hergestellt aus einer gießbaren, aushärtbaren Masse gemäß einem der Ansprüche 1 bis 6.

## Claims

1. A castable, curable composition for producing plastics moulded articles, comprising a syrup containing a proportion of acrylic acid monomer and/or derivatives thereof and a proportion of a further component containing one or more compounds of the formula (I): 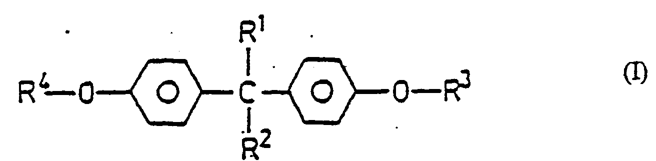 in which **R**¹ and **R**² are the same or different and represent a hydrogen atom, a C₁-C₆ alkyl group, an aryl group or jointly a cycloalkyl group, wherein the C₁-C₆ alkyl group, the aryl group and the cycloalkyl group can be substituted once or several times with a halogen atom, a cyano group, an alkyl group, an hydroxyl group, a carbonyl group and/or a carboxyl group,
in which **R**³ and **R**⁴ are the same or different and
a) represent an ethylenically unsaturated group of the formula (II):
-R⁵-R⁶ (II)
in which **R**⁵ represents a single bond, an ether group of the formula -(CR₂⁷)ₘ-O- (in which **R**⁷ signifies hydrogen or alkyl and **m** an integer from 1 to 10) or a polyether group of the formula -(CH₂-CH₂-O)ₙ- or -(CH₂-CH₂-CH₂-O)ₙ-, and **n** is an integer from 1 to 6, and
in which **R**⁶ represents an at least mono-unsaturated alkylene group with two or more C atoms, an acrylate group or a methacrylate group;
and/or
b) represent a group of the formula (III): 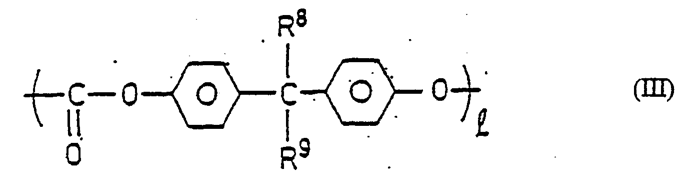 in which **R**⁸ and **R**⁹ are defined like **R**¹ and **R**², but independently thereof,
and ℓ is an integer from 1 to 10,000, wherein **R**⁸ and **R**⁹ can have varying meanings when ℓ > **1** in the formula (III),
and/or
c) represent hydrogen, wherein at the most one of the residues **R**³ and **R**⁴ is a hydrogen atom,
and the syrup optionally includes a proportion of a prepolymer, in particular polymethyl methacrylate (PMMA),
and, in addition, contains a particulate, inorganic filler at a proportion of approximately 50 to 90% by weight in relation to the total composition, pigments and a radical initiator system, the viscosity of the total composition being ≤ 80 Pa · s, and the ratio of the sum of the weight content of acrylic acid monomer and its monomeric derivatives to the sum of the weight content of the further component and the weight content of prepolymer being 99 : 1 to 30 : 70, and, in the presence of prepolymer, the ratio of the weight content of the further component to the weight content of the prepolymer being at least 5 : 95.

2. A castable composition according to Claim 1, **characterized in that** the particle size distribution of the inorganic filler is selected to be such that at least 80% by weight of the filler has a particle size > 10 µm.

3. A castable composition according to Claim 1 or 2, **characterized in that** the particle size distribution of the inorganic filler is selected to be such that at least 10% by weight of the filler has a particle size > 60 µm.

4. A castable composition according to one of Claims 1 to 3, **characterized in that** the ratio of the sum of the weight content of the acrylic acid monomer and its monomeric derivatives to the sum of the weight content of the further component and PMMA is from 95 : 5 to 40 : 60, more preferably from 90 : 10 to 50 : 50.

5. A castable composition according to one of Claims 1 to 4, **characterized in that** the inorganic filler is silanized.

6. A castable composition according to one of Claims 1 to 5, **characterized in that** the inorganic filler comprises - individually or in combination - glass, glass beads, quartz, cristobalite, tridymite or other SiO₂ modifications as well as aluminium trihydroxide.

7. A plastics moulded article produced from a castable, curable composition according to one of Claims 1 to 6.

## Revendications

1. Matière pouvant être coulée et durcie pour produire des pièces moulées en plastique, contenant un sirop, qui contient une part de monomère de l'acide acrylique et/ou de dérivés de celui-ci et une part d'un autre constituant, qui contient un ou plusieurs composés de formule (I) : 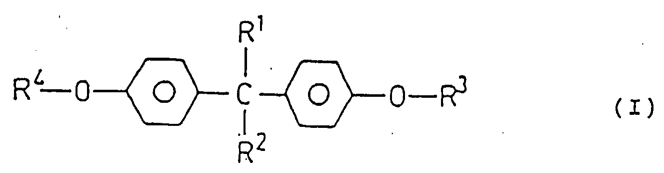 dans laquelle R¹ et R² sont identiques ou différents et représentent un atome d'hydrogène, un groupe alkyle en C₁-C₆, un groupe aryle ou ensemble un groupe cycloalkyle, les groupes alkyle en C₁-C₆, aryle et cycloalkyle pouvant être substitués une ou plusieurs fois avec un atome d'halogène, un groupe cyano, un groupe alkyle, un groupe hydroxyle, un groupe carbonyle et/ou un groupe carboxyle,
dans laquelle R³ et R⁴ sont identiques ou différents et
a) représentent un groupe éthyléniquement insaturé de formule (II)
-R⁵-R⁶ (II)
dans laquelle R⁵ représente une simple liaison, un groupe éther de formule -(CR₂⁷)ₘ-O- (dans laquelle R⁷ représente un atome d'hydrogène ou un groupe alkyle et m un nombre entier de 1 à 10) ou un groupe polyéther de formule -(CH₂-CH₂-O)ₙ- ou -(CH₂-CH₂-CH₂-O)ₙ-, dans laquelle n est un nombre entier de 1 à 6 et
dans laquelle R⁶ représente un groupe alcényle au moins mono-insaturé avec 2 atomes de carbone ou plus, un groupe acrylate ou un groupe méthacrylate;
et/ou
b) représentent un groupe de formule (III) : 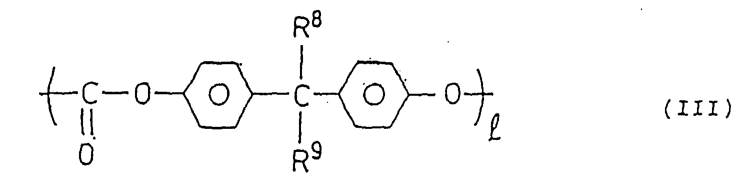 dans laquelle R⁸ et R⁹ sont définis comme R¹ et R², cependant de manière indépendante de ceux-ci et ℓ est un nombre entier de 1 à 10 000, R⁸ et R⁹ pouvant avoir pour ℓ > 1 dans la formule (III), une signification variable,
et/ou
c) représentent un atome d'hydrogène, au moins un des radicaux R³ et R⁴ étant un atome d'hydrogène,
et matière dans laquelle le sirop contient éventuellement une part d'un prépolymère, en particulier de polyméthacrylate de méthyle (PMMA)
et contient en outre une teneur d'environ 50 à 90% en poids par rapport à la masse globale d'une charge minérale particulaire, des pigments et un système initiateur radicalaire, dans laquelle la viscosité de la masse globale est ≤ 80 Pa.s et dans laquelle le rapport de la somme du pourcentage en poids de monomère de l'acide acrylique et de dérivés de ce monomère sur la somme du pourcentage en poids de l'autre constituant et du pourcentage en poids de prépolymère est de 99:1 à 30:70, dans laquelle en présence de prépolymère le rapport du pourcentage en poids de l'autre constituant au pourcentage en poids de prépolymère est d'au moins 5:95.

2. Matière pouvant être coulée selon la revendication 1, caractérisée en ce que la distribution granulométrique de la charge minérale est choisie de telle sorte qu'au moins 80% en poids de la charge présente une grosseur de grain > 10 µm.

3. Matière pouvant être coulée selon la revendication 1 ou 2, caractérisée en ce que la distribution granulométrique de la charge minérale est choisie de telle sorte qu'au moins 10% en poids de la charge présente une grosseur de grain > 60 µm.

4. Matière pouvant être coulée selon l'une des revendications 1 à 3, caractérisée en ce que le rapport de la somme des pourcentages en poids du monomère de l'acide acrylique et des dérivés monomères de celui-ci à la somme des pourcentages en poids de l'autre constituant et du PMMA a une valeur de 95:5 à 40:60, de manière plus particulièrement préférée de 90:10 à 50:50.

5. Matière pouvant être coulée selon l'une des revendications 1 à 4, caractérisée en ce que la charge minérale est sous la forme de silane.

6. Matière pouvant être coulée selon l'une des revendications 1 à 5, caractérisée en ce que la charge minérale contient, seule ou en mélange, du verre, des billes de verre, du quartz, de la cristobalite, de la tridymite ou d'autres composés à base de SiO₂ ainsi que du trihydroxyde d'aluminium.

7. Pièce moulée en plastique fabriquée à partir d'une matière pouvant être coulée et durcie selon l'une des revendications 1 à 6.
